# EUROPEAN PATENT SPECIFICATION

(11) **EP 4 378 772 B1**
(45) Date of publication and mention of the grant of the patent: **20.11.2024**
(21) Application number: 22210783.1
(22) Date of filing: 01.12.2022
(51) Int. Cl.: B60T 17/22

(54) **BRAKE SYSTEM COMPONENT FOR A VEHICLE, TESTING SYSTEM FOR ASSESSING A QUALITY PARAMETER OF A BRAKE FLUID, TEST DEVICE, VEHICLE, AND METHOD FOR ASSESSING A QUALITY PARAMETER OF A BRAKE FLUID**
BREMSSYSTEMKOMPONENTE FÜR EIN FAHRZEUG, PRÜFSYSTEM ZUM BEURTEILEN EINES QUALITÄTSPARAMETERS EINER BREMSFLÜSSIGKEIT, PRÜFVORRICHTUNG, FAHRZEUG UND VERFAHREN ZUM BEURTEILEN EINES QUALITÄTSPARAMETERS EINER BREMSFLÜSSIGKEIT
COMPOSANT DE SYSTÈME DE FREINAGE POUR UN VÉHICULE, SYSTÈME DE CONTRÔLE POUR ÉVALUER UN PARAMÈTRE DE QUALITÉ D'UN FLUIDE DE FREINAGE

(43) Date of publication of application: 05.06.2024
(73) Proprietor: Volvo Car Corporation, 405 31 Göteborg (SE)
(72) Inventor: STOOPENDAHL, Madeleine, 40531 Göteborg (SE); ZETTERSTRÖM, Susanne, 40531 Göteborg (SE)
(74) Representative: Maiwald GmbH

(56) References cited:
- GB-A- 2 179 108
- US-A- 3 373 849
- US-A1- 2013 057 054
- US-A1- 2022 274 575

## Description

The present invention relates to a brake system component for a vehicle.

The present invention additionally is directed to a testing system for assessing a quality parameter of a brake fluid.

The present invention also relates to a test device for such a testing system.

Moreover, the present invention is directed to a vehicle.

Furthermore, the present invention relates to a method for assessing a quality parameter of a brake fluid.

A brake system is an essential part of a vehicle ensuring safe operation thereof.

GB 2 179 108 A discloses a multiple-circuit hydraulic brake system, in particular for automotive vehicles. The brake system comprises a servo-assisted brake-actuating device supplied with servo pressure from a supply system, several pressurisable working chambers for pressurisation of wheel-brake cylinders and a fast-fill cylinder inserted into a brake circuit. One end compartment of the fast-fill cylinder is connected via pressure lines to one pressure chamber of the brake-actuating device and the other end compartment of the fast-fill cylinder is connected by line to a brake line leading from the brake-actuating device to at least one wheel cylinder. A normally-open controlled non-return valve is arranged in the pressure line which valve closes its pressure-fluid passage upon failure of the servo supply system pressure acting in the pressure line and/or upon a sufficient rise of the pressure in the one working chamber and thus hydraulically locks the stepped piston of the fast-fill cylinder preventing displacement of the piston.

Known brake systems use a brake fluid in order to transfer a braking request from a brake pedal unit or a master cylinder unit to the actual brakes of the vehicle, i.e. the components actually decelerating the vehicle's wheels. Thus, it is important to ensure at all times that a quality of the brake fluid allows for a reliable operation of the braking system. In other words, all relevant quality parameters of the brake fluid need to be in a corresponding desired range.

This may be done by regularly changing the brake fluid.

In this context, a relevant quality parameter of the brake fluid is the water content. Thus, it has to be ensured that the water content of the brake fluid does not exceed a predefined threshold, e.g. 3% of the volume of the brake fluid.

Instead of regularly changing the brake fluid, it is also known to change the brake fluid based on a measurement of the desired quality parameter of the brake fluid using a measurement apparatus. However, such measurement apparatuses are often complicated in use, especially if a relatively precise measurement result is needed. Alternatively, relatively simple measurements are usually not be precise enough.

It is an objective of the present invention to improve the assessment of a quality parameter of a brake fluid such that the quality parameter may be determined in a simple and reliable manner. The quality parameter is for example the water content.

The problem is at least partially solved or alleviated by the subject matter of the independent claims of the present invention, wherein further examples are incorporated in the dependent claims.

According to a first aspect, there is provided a brake system component for a vehicle. The brake system component comprises a channel for guiding a brake fluid and a sample outlet module for withdrawing a brake fluid sample from the channel. The sample outlet module is fluidically connected to the channel. Moreover, the sample outlet module comprises a non-return valve having a blocking direction being directed towards an environment of the sample outlet module. The sample outlet module also comprises a thrust piece for selectively opening the non-return valve. Using the sample outlet module, a brake fluid sample can be taken from the brake system component in a simple manner. To this end, the non-return valve may be opened by operating the thrust piece. Thus, the brake fluid sample can be withdrawn without the need to use tools. Moreover, it is not necessary to dismount parts in order to withdraw a brake fluid sample. Due to the properties of a non-return valve, the sample outlet module is reliably sealed with respect to the environment, if it is not used, i.e. if no brake fluid sample is withdrawn from the sample outlet module. Consequently, undesired leakage of brake fluid is reliably avoided.

In an example, the non-return valve comprises a spring-biased valve element. The valve element may be ball-shaped. In order to open such a valve, the valve element has to be pushed against the spring bias. Such non-return valves are structurally simple and may be operated in a reliable manner.

In an example, the thrust piece comprises a sampling channel for guiding the brake fluid sample to the environment. In this context, the sampling channel connects the channel and the environment if the non-return valve is in an open condition. If the non-return valve is closed, the sampling channel is blocked such that the channel and the environment are fluidically separated from one another. Thus, using a sampling channel, a brake fluid sample may be reliably withdrawn from the channel, if desired. Otherwise, the channel is reliably sealed with respect to the environment.

In an example, the thrust piece comprises a reservoir for receiving a predefined quantity of brake fluid. In this case, the reservoir may be filled with brake fluid if the non-return valve is opened. Then, the brake fluid may be withdrawn from the reservoir as a brake fluid sample. This has the effect that a quantity of the brake fluid sample is defined by the volume of the reservoir. This further facilitates taking a brake fluid sample from the brake system component.

In an example, the thrust piece comprises a hollow needle for fluidically connecting the thrust piece to a test device. In this context, the hollow needle may be fluidically connected to the reservoir and/or to the sampling channel. The test device may be a device for receiving the brake fluid sample and/or for analyzing the brake fluid sample. Using the hollow needle allows to reliably transfer the brake fluid sample to the test device.

In an example, the sample outlet module comprises a protection collar extending around the hollow needle and protruding over the hollow needle along a length direction of the hollow needle. This has the effect that an unintentional contact of a human being or a device with the hollow needle is blocked. Consequently, potential injuries of the human being and damages on the device are avoided.

In an example, the thrust piece comprises a pressure surface for applying a motive force to the thrust piece. Thus, the thrust piece can be reliably moved such that the non-return valve can be reliably opened and/or closed. In an exemplary case, the thrust piece is moved such that it acts on a valve element of the non-return valve against its blocking direction.

In an example, the hollow needle extends from the pressure surface. This configuration makes it simple to ensure that an appropriate test device is provided before the thrust piece is operated and the non-return valve is open.

In an example, the hollow needle extends from a center of the pressure surface.

In an example, the channel and the sample outlet module are coupled via a pair of mutually engaged screw threads. In simplified words, the sample outlet module is screwed into the part forming the channel. Thus, the channel and the sample outlet module may be coupled in a simple and reliable manner. The sample outlet module, more precisely the screw thread of the sample outlet module, may also be configured to be able to interact with known screw threats on the part comprising the channel.

In an example, the screw thread of the sample outlet module may have the same properties and dimensions as a known air screw. Consequently, a known air screw of a brake system component may be replaced by the sample outlet module. This has the effect that the sample outlet module may be retro-fitted to known brake system components.

In an example, the brake system component is a brake caliper or a brake system pipe or a pipe fitting. Consequently, using the sample outlet module, a brake fluid sample can be withdrawn from the brake caliper or the brake system pipe or a pipe fitting. The pipe fitting may also be called a connector part.

In an example in which the quality parameter to be assessed is a water content of the brake fluid, it is especially useful if the brake system component is a brake caliper. This is due to the phenomenon that within a brake system, usually, the highest water content occurs at the brake calipers. Thus, it can be ensured that the water content of the brake fluid stays below a predefined threshold with high reliability.

According to a second aspect, there is provided a testing system for assessing a quality parameter of a brake fluid. The testing system comprises a brake system component of the present invention and a test device. The test device comprises a receptacle and an operating surface for selectively operating the thrust piece, wherein an indicator fluid is provided in the receptacle. In other words, the thrust piece may be operated using the test device. Thus, by applying the test device to the thrust piece, the non-return valve is opened and the brake fluid sample is withdrawn from the channel. This has the effect that the brake fluid sample is directly led to the test device. The indicator fluid in the receptacle of the test device is adapted to the quality parameter of the brake fluid to be assessed. Altogether, the brake fluid sample may be directly led into the receptacle and may directly interact with the indicator fluid provided therein. Consequently, the quality parameter of the brake fluid may be assessed with high precision. At the same time, especially since the brake fluid sample does not need to be handled between the brake system component and the test device, withdrawing the brake fluid sample is simple.

In an example, the indicator fluid comprises anhydrous copper (II) or an acid with a pH indicator. Such an indicator fluid is especially suitable for assessing a water content of the brake fluid. The water content can be assessed by observing a color change of the indicator fluid. It is noted that an indicator fluid comprising anhydrous copper (II) may need to be stoichiometrically adapted to the specific type of brake fluid being used. In a case in which the brake fluid comprises borates and an indicator fluid comprising an acid with a pH indicator is used, the indicator fluid needs to be balanced to the specific borate content.

In an example, the receptacle may be formed as a vial. Especially, the vial may be of the CG-MS type.

According to a third aspect, there is provided a test device for a testing system according to the present invention. The test device comprises a receptacle and an operating surface for selectively operating the thrust piece, wherein an indicator fluid is provided in the receptacle. Using such a test device, a quality parameter of the brake fluid may be assessed in a simple and reliable manner. As has been explained before, the indicator fluid is adapted to the quality parameter to be assessed.

In an example, the receptacle is sealed with a pierceable sealing means. This is especially suitable if the sampling module comprises a hollow needle. In such a case, the hollow needle may pierce the sealing means in order to transfer the brake fluid sample into the receptacle, i.e. to mix the brake fluid sample with the indicator fluid.

In an example, the sealing means is a membrane or a foil covering an opening of the receptacle.

In an example, an inert gas is provided in the receptacle. In this context, the indicator fluid and the inert gas fully fill the receptacle. In other words, no air or other substances than inert gas and indicator fluid are present in the receptacle. This has the effect that undesired chemical or physical reactions of the indicator fluid are avoided. Consequently, the test device has a long shelf life.

According to a fourth aspect, there is provided a vehicle comprising a brake system having a brake system component of the present invention. Thus, using the sample outlet module, a brake fluid sample can be taken from the brake system component in a simple manner as has already been described above. Due to the properties of the non-return valve, the sample outlet module is reliably sealed with respect to the environment, if it is not used, i.e. if no brake fluid sample is withdrawn from the sample outlet module. Consequently, undesired leakage of brake fluid is reliably avoided. Altogether, a quality of the brake fluid of the vehicle can be checked in a simple and reliable manner.

In an example, the sample outlet module is arranged at a right rear brake caliper or in proximity to a right rear caliper if the vehicle is a left-handed vehicle. In a case in which the vehicle is a right-handed vehicle, the sample outlet module may be arranged at a left rear brake caliper or in proximity thereto. This arrangement is especially advantageous if the quality parameter to be assessed is a water content. The highest water content is usually measured at the brake calipers and, more precisely, the brake caliper being most remote from the master cylinder unit of the brake system. This is the case for the right rear brake caliper in a left-handed vehicle and the left rear caliper in a right-handed vehicle. Thus, by guaranteeing that the quality parameter is within the desired boundaries at these locations, the overall quality of the brake fluid is ensured.

In an example, the sample outlet module is arranged on the vehicle such that it can be accessed without dismounting any part of the vehicle, especially without needing to dismount a wheel.

According to a fifth aspect, there is provided a method for assessing a quality parameter of a brake fluid. The method comprises:
- providing a brake system component of the present invention and a test device of the present invention,
- temporarily opening the non-return valve by applying a motive force to the thrust piece via the operating surface of the test device, and
- receiving a brake fluid sample inside the receptacle, and
- observing a change of a property of the indicator fluid resulting from an interaction of the sample of brake fluid and the indicator fluid.

This means that the non-return valve is temporarily opened by pressing the test device against the thrust piece. Consequently, the brake fluid sample is directly led into the receptacle of the test device. The observed property of the indicator fluid is for example a color of the indicator fluid. Based on a color change, the quality parameter of the brake fluid may be assessed. For performing this method, other than the brake system component of the present invention, only a test device of the present invention is needed. Put otherwise, no tools or further machinery is needed in order to perform the method. Consequently, the method is simple. At the same time, it can be performed practically anywhere, e.g. on a parking lot. At the same time, the assessment of the quality parameter is highly precise. This is mainly due to the fact that the brake fluid sample is directly mixed with the indicator fluid of the test device. Due to the fact that the test device is directly applied to the sampling module, the potential of contaminating the brake fluid sample while being transferred from the channel of the brake system into the test device is very small. Also the fact that for each brake fluid sample, a new test device may be used, renders the quality assessment precise and reliable.

It should be noted that the above examples may be combined with each other irrespective of the aspect involved.

These and other aspects of the present invention will become apparent from and elucidated with reference to the examples described hereinafter.

Examples of the invention will be described in the following with reference to the following drawings.
- Figure 1: shows a vehicle according to the present invention having a brake system with a brake system component of the present invention, wherein the brake system component forms part of a testing system according to the present invention and can be used for performing a method according to the present invention for assessing a quality parameter of a brake fluid,
- Figure 2: shows a detail of the brake system component of Figure 1 in a sectional view, and
- Figure 3: shows a test device of the present invention forming part of the testing system of the present invention in a sectional view, wherein the test device may be used for performing a method according to the present invention for assessing a quality parameter of a brake fluid

The Figures are merely schematic representations and serve only to illustrate examples of the invention. Identical or equivalent elements are in principle provided with the same reference signs.

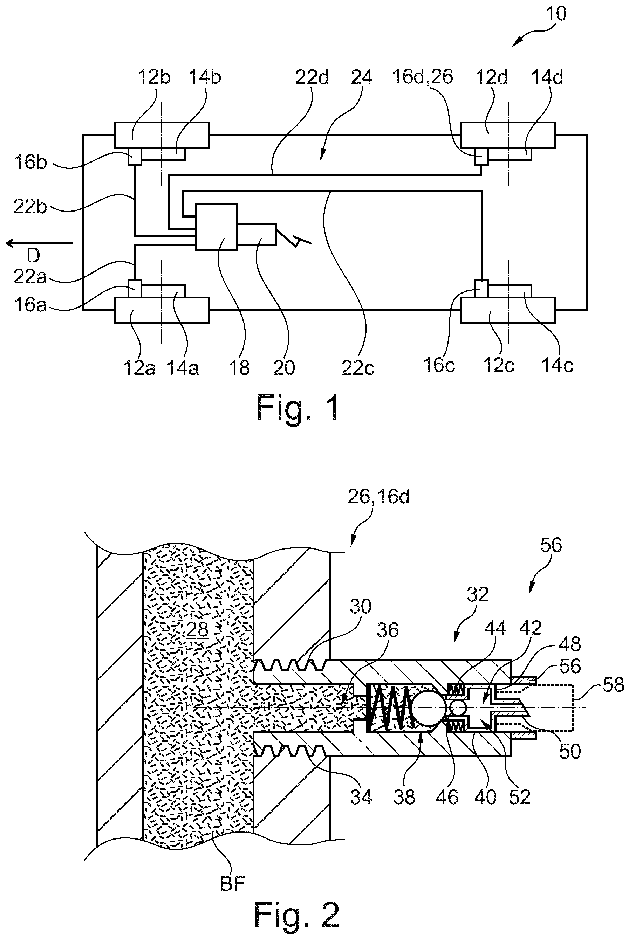

Figure 1 shows a vehicle 10 having four wheels 12a, 12b, 12c, 12d.

In the present example, wheels 12a and 12b form front wheels and wheels 12c and 12d form rear wheels.

The forward driving direction of the vehicle 10 is indicated by arrow D.

A brake disc 14a, 14b, 14c, 14d is connected to each of the wheels 12a, 12b, 12c, 12d respectively.

Moreover, a brake caliper 16a, 16b, 16c, 16d is associated to each of the brake discs 14a, 14b, 14c, 14d. This means that each of the brake calipers 16a, 16b, 16c, 16d is configured to frictionally engage the associated brake disc 14a, 14b, 14c, 14d in order to decelerate the wheel 12a, 12b, 12c, 12d to which the associated brake disc 14a, 14b, 14c, 14d is connected.

The vehicle 10 additionally comprises a master cylinder unit 18 and a brake pedal unit 20. The brake pedal unit 20 is connected to the master cylinder unit 18.

Moreover, each of the brake calipers 16a, 16b, 16c, 16d is fluidically connected to the master cylinder unit 18 via an associated brake system pipe 22a, 22b, 22c, 22d.

The brake discs 14a, 14b, 14c, 14d, the brake calipers 16a, 16b, 16c, 16d, the master cylinder unit 18, the brake pedal unit 20 and the brake system pipes 22a, 22b, 22c, 22d together form a brake system 24. The brake system pipes 22a, 22b, 22c, 22d may be connected to the respective brake calipers 16a, 16b, 16c, 16d by respective pipe fittings which also form part of the brake system 24.

Thus, the brake calipers 16a, 16b, 16c, 16d, the master cylinder unit 18, the brake pedal unit 20, each of the brake system pipes 22a, 22b, 22c, 22d and each of the pipe fittings may also be referred to as a brake system component 26.

In the following, the term brake system component 26 refers to the brake caliper 16d which is the brake caliper being associated to the right rear wheel 12d.

The brake caliper 16d, i.e. the brake system component 26, is shown in more detail in Figure 2.

The brake system component 26 comprises a channel 28 for guiding a brake fluid BF.

More precisely, using the channel 28, pressurized brake fluid BF may be guided to a piston which is connected to a brake pad in order to frictionally engage the corresponding brake disc 14d with the brake pad. This is generally known and, therefore, will not be explained in further detail.

On the brake system component 26, i.e. on the brake caliper 16d, a threaded hole 30 is provided and a sample outlet module 32 is connected to the brake caliper 16d via the threaded hole 30.

More precisely, the sample outlet module 32 comprises a threaded portion 34 which threadingly engages the threaded hole 30.

In the present example, the threaded hole 30 has originally been configured to receive an air screw. Thus, the air screw has been replaced by the sample outlet module 32.

The sample outlet module 32 is fluidically connected to the channel 28.

Moreover, the sample outlet module 32 comprises a sampling channel 36 for selectively guiding a brake fluid sample to an environment of the brake system 24.

At an end of the sampling channel 36 being remote from the channel 28, a non-return valve 38 is arranged. The non-return valve 38 has a blocking direction being directed towards the environment of the sample outlet module 32.

This means, that in a non-actuated condition of the non-return valve 38, brake fluid BF cannot leave the brake system 24, more precisely the channel 28 or the sample outlet module 32.

In the present example, the non-return valve 38 comprises a ball-shaped valve element which is spring-biased against a conical valve seat.

The sample outlet module 32 also comprises a thrust piece 40. The thrust piece 40, the valve element of the non-return valve 38 and the sampling channel 36 are arranged coaxially.

Moreover, the thrust piece 40 is guided within the sample outlet module 32 such that it can only move in parallel a middle axis of the sampling channel 36.

The thrust piece 40 is configured to selectively open the non-return valve 38.

To this end, the thrust piece 40 comprises a main body with a reservoir 42 and a thrust collar 44 extending therefrom towards the valve element of the non-return valve 38. An end of the thrust collar 44 abuts against the valve element 44. Moreover, a plurality of thrust collar openings 46 are provided in the thrust collar 44.

On a side opposite the thrust collar 44, the thrust piece 40 comprises a pressure surface 48.

In order to open the non-return valve 38, a motive force may be applied to the pressure surface 48 and the thrust piece 40 may be moved in an opening direction of the non-return valve 38. Thereby, the thrust piece 40 opens the non-return valve 38 by lifting the valve element form the valve seat. Consequently, a fluidic connection is created between the channel 28 and the reservoir 42. In more detail, brake fluid BF can flow from the channel 28 through the sampling channel 36, around the valve element and into the thrust piece 40 via the thrust collar openings 46 in order to reach the reservoir 42.

Beyond that, the thrust piece 40 comprises a hollow needle 50 which is configured to fluidically connect the thrust piece 40 to a test device as will be explained later.

The hollow needle 50 extends from a center of the pressure surface 48.

Consequently, the thrust collar openings 46, the reservoir 42 and the hollow needle 50 may also be referred to as a sampling channel 52 of the thrust piece 40.

In order to protect the hollow needle 50 from undesired contacts with other elements or humans, a protection collar 54 is provided on the sample outlet module 32. The protection collar 54 extends coaxially to the hollow needle 50 and protrudes over the hollow needle 50 along a length direction of the hollow needle 50.

Altogether, the sample outlet module 32 can be used for withdrawing a brake fluid sample from the channel 28. This will be explained in more detail below.

In this context, the brake system component 26, i.e. the brake caliper 16d comprising the sample outlet module 32 forms part of a testing system 56 for assessing a quality parameter of the brake fluid BF.

In the present example, the quality parameter to be assessed is the water content of the brake fluid BF.

A further component of the testing system 56 is a test device 58.

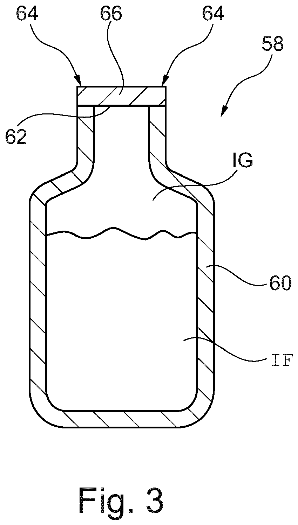

The test device 58 is shown in more detail in Figure 3. Moreover, the test device 58 is indicated with dashed lines in Figure 2.

The test device 58 comprises a receptacle 60 which generally has the form of a bottle.

The receptacle 60 has a receptacle opening 62 which is delimited by a rim.

The receptacle opening 62 is sealed by a pierceable sealing means 66 which in the present example is a membrane. The membrane 66 is impermeable with respect to ambient air, but can be pierced using the hollow needle 50.

On the rim of the receptacle 60, which may be covered by the pierceable sealing means 66, there is provided a ring-shaped operating surface 64.

The operating surface 64 is configured to contact the pressure surface 48 of the thrust piece 40.

Furthermore, in the interior of the receptacle 60, there is provided an indicator fluid IF and inert gas IG.

The indicator fluid IF and the inert gas IG completely fill the interior of the receptacle 60, i.e. no other substances are present therein.

Consequently, a water content of the brake fluid BF of the brake system 24 can be assessed using a testing system 56 comprising the brake system component 26 and the test device 58.

A method for assessing a quality parameter over brake fluids, thus comprises the following steps.

In a first step, the brake system component 26 and the test device 58 are provided.

In a subsequent, second step, the non-return valve 38 is temporarily opened by applying a motive force to the thrust piece 40 via the operating surface 64 of the test device 58.

This means that the test device 58 is located adjacent to the thrust piece 40 such that the operating surface 64 contacts the pressure surface 48. When doing so, the hollow needle 50 pierces the pierceable sealing means 66. In simplified words, the non-return valve 38 is opened by pushing the rim of the bottle-shaped test device 58 against the thrust piece 40.

Due to the opening of the non-return valve, a fluid connection is provided between the channel 28 and the inside of the receptacle 60. Consequently, a brake fluid sample is received inside the receptacle 60 in a third step S3. This brake fluid sample flows from the channel 28 through the sampling channel 36, circumvents the valve element, flows through the thrust collar opening 46, through the reservoir 42 and through the hollow needle 50 until it reaches the interior of the receptacle 60.

In the interior of the receptacle 60, the brake fluid sample interacts with the indicator fluid IF.

In the present example, the indicator fluid is an acid with a pH indicator which changes color as a function of the water content of the brake fluid BF.

Consequently, in a fourth step, a change of the color of the indicator fluid IF may be observed. Based on the color change, a water content may be assessed.

It is noted that the non-return valve 38 is just opened for a relatively short time, until a relatively small quantity of the brake fluid BF is received inside the receptacle 60. To this end, the test device 58 is pushed against the thrust piece 40 for a relatively short time, for example 1 second.

Other variations to the disclosed examples can be understood and effected by those skilled in the art in practicing the claimed invention, from the study of the drawings, the disclosure, and the appended claims. In the claims the word "comprising" does not exclude other elements or steps and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope of the claims.

### LIST OF REFERENCE SIGNS

- 10: vehicle
- 12a: wheel
- 12b: wheel
- 12c: wheel
- 12d: wheel
- 14a: brake disc
- 14b: brake disc
- 14c: brake disc
- 14d: brake disc
- 16a: brake caliper
- 16b: brake caliper
- 16c: brake caliper
- 16d: brake caliper
- 18: master cylinder unit
- 20: brake pedal unit
- 22a: brake system pipe
- 22b: brake system pipe
- 22c: brake system pipe
- 22d: brake system pipe
- 24: brake system
- 26: brake system component
- 28: channel
- 30: threaded hole
- 32: sample outlet module
- 34: threaded portion
- 36: sampling channel
- 38: non-return valve
- 40: thrust piece
- 42: reservoir
- 44: thrust collar
- 46: thrust collar opening
- 48: pressure surface
- 50: hollow needle
- 52: sampling channel
- 54: protection collar
- 56: testing system
- 58: test device
- 60: receptacle
- 62: receptacle opening
- 64: operating surface
- 66: pierceable sealing means

- D: forward driving direction
- BF: brake fluid
- IF: indicator fluid
- IG: inert gas

## Claims

1. A brake system component (26) for a vehicle (10), comprising a channel (28) for guiding a brake fluid (BF) and a sample outlet module (32) for withdrawing a brake fluid sample from the channel (28),
wherein the sample outlet module (32) is fluidically connected to the channel (28),
wherein the sample outlet module (32) comprises a non-return valve (38) having a blocking direction being directed towards an environment of the sample outlet module (32), and
wherein the sample outlet module (32) comprises a thrust piece (40) for selectively opening the non-return valve (38).

2. The brake system component (26) of claim 1, wherein the thrust piece (40) comprises a sampling channel (52) for guiding the brake fluid sample to the environment.

3. The brake system component (26) of any one of the preceding claims, wherein the thrust piece (40) comprises a reservoir (42) for receiving a predefined quantity of brake fluid (BF).

4. The brake system component (26) of any one of the preceding claims, wherein the thrust piece (40) comprises a hollow needle (50) for fluidically connecting the thrust piece (40) to a test device (58).

5. The brake system component (26) of claim 4, wherein the sample outlet module (32) comprises a protection collar (54) extending around the hollow needle (50) and protruding over the hollow needle (50) along a length direction of the hollow needle (50).

6. The brake system component (26) of any one of the preceding claims, wherein the thrust piece (40) comprises a pressure surface (48) for applying a motive force to the thrust piece (40).

7. The brake system component (26) of claims 4 or 5 and claim 6, wherein the hollow needle (50) extends from the pressure surface (48).

8. The brake system component (26) of any one of the preceding claims, wherein the channel (28) and the sample outlet module (32) are coupled via a pair of mutually engaged screw threads.

9. The brake system component (26) of any one of the preceding claims, wherein the brake system component (26) is a brake caliper (16a, 16b, 16c, 16d), a brake system pipe (22a, 22b, 22c, 22d) or a pipe fitting.

10. A testing system (56) for assessing a quality parameter of a brake fluid (BF), comprising a brake system component (26) of any one of the preceding claims and a test device (58),
wherein the test device (58) comprises a receptacle (60) and an operating surface (64) for selectively operating the thrust piece (40), wherein an indicator fluid (IF) is provided in the receptacle (60).

11. A test device (58) for a testing system (56) according to claim 10, comprising a receptacle (60) and an operating surface (64) for selectively operating the thrust piece (40), wherein an indicator fluid (IF) is provided in the receptacle (60).

12. The test device (58) of claim 11, wherein the receptacle (60) is sealed with a pierceable sealing means (66).

13. The test device (58) of claim 11 or 12, wherein an inert gas (IG) is provided in the receptacle (60).

14. A vehicle (10) comprising a brake system (24) having a brake system component (26) of any one of claims 1 to 9.

15. A method for assessing a quality parameter of a brake fluid (BF), comprising
- providing a brake system component (26) of any one of claims 1 to 9 and a test device (28) of any one of claims 11 to 13,
- temporarily opening the non-return valve (38) by applying a motive force to the thrust piece (40) via the operating surface (64) of the test device (58), and
- receiving a brake fluid sample inside the receptacle (60), and
- observing a change of a property of the indicator fluid (IF) resulting from an interaction of the brake fluid sample and the indicator fluid (IF).

## Patentansprüche

1. Bremssystemkomponente (26) für ein Fahrzeug (10), umfassend einen Kanal (28) zum Leiten eines Bremsfluids (BF) und ein Probenauslassmodul (32) zum Entnehmen einer Bremsfluidprobe aus dem Kanal (28),
wobei das Probenauslassmodul (32) mit dem Kanal (28) in Strömungsverbindung steht, wobei das Probenauslassmodul (32) ein Rückschlagventil (38) umfasst, das eine Sperrrichtung aufweist, die in eine Umgebung des Probenauslassmoduls (32) gerichtet ist, und
wobei das Probenauslassmodul (32) ein Axialschubstück (40) zum selektiven Öffnen des Rückschlagventils (38) umfasst.

2. Bremssystemkomponente (26) nach Anspruch 1, wobei das Axialschubstück (40) einen Probennahmekanal (52) umfasst, um die Bremsfluidprobe zu der Umgebung zu leiten.

3. Bremssystemkomponente (26) nach einem der vorangehenden Ansprüche, wobei das Axialschubstück (40) ein Reservoir (42) zum Aufnehmen einer vordefinierten Menge an Bremsfluid (BF) umfasst.

4. Bremssystemkomponente (26) nach einem der vorangehenden Ansprüche, wobei das Axialschubstück (40) eine Hohlnadel (50) zum fluidischen Verbinden des Axialschubstücks (40) mit einer Testvorrichtung (58) umfasst.

5. Bremssystemkomponente (26) nach Anspruch 4, wobei das Probenauslassmodul (32) einen Schutzbund (54) umfasst, der sich um die Hohlnadel (50) herum erstreckt und über die Hohlnadel (50) entlang einer Längsrichtung der Hohlnadel (50) vorsteht.

6. Bremssystemkomponente (26) nach einem der vorangehenden Ansprüche, wobei das Axialschubstück (40) eine Druckfläche (48) zum Anlegen einer Antriebskraft an das Axialschubstück (40) umfasst.

7. Bremssystemkomponente (26) nach Anspruch 4 oder 5 und Anspruch 6, wobei sich die Hohlnadel (50) von der Druckfläche (48) erstreckt.

8. Bremssystemkomponente (26) nach einem der vorangehenden Ansprüche, wobei der Kanal (28) und das Probenauslassmodul (32) über ein Paar sich gegenseitig in Eingriff nehmende Schraubgewinde gekoppelt sind.

9. Bremssystemkomponente (26) nach einem der vorangehenden Ansprüche, wobei die Bremssystemkomponente (26) ein Bremssattel (16a, 16b, 16c, 16d), eine Bremssystemleitung (22a, 22b, 22c, 22d) oder ein Leitungsanschlussstück ist.

10. Testsystem (56) zum Beurteilen eines Qualitätsparameters eines Bremsfluids (BF), umfassend eine Bremssystemkomponente (26) nach einem der vorangehenden Ansprüche und eine Testvorrichtung (58),
wobei die Testvorrichtung (58) einen Behälter (60) und eine Betätigungsfläche (64) zum selektiven Betätigen des Axialschubstücks (40) umfasst, wobei in dem Behälter (60) ein Indikatorfluid (IF) vorhanden ist.

11. Testvorrichtung (58) für ein Testsystem (56) nach Anspruch 10, einen Behälter (60) und eine Betätigungsfläche (64) zum selektiven Betätigen des Axialschubstücks (40), wobei in dem Behälter (60) ein Indikatorfluid (IF) vorhanden ist.

12. Testvorrichtung (58) nach Anspruch 11, wobei der Behälter (60) mit einem durchstechbaren Versiegelungsmittel (66) versiegelt ist.

13. Testvorrichtung (58) nach Anspruch 11 oder 12, wobei in dem Behälter (60) ein Inertgas (IG) vorhanden ist.

14. Fahrzeug (10), umfassend ein Bremssystem (24), das eine Bremssystemkomponente (26) nach einem der Ansprüche 1 bis 9 aufweist.

15. Verfahren zum Beurteilen eines Qualitätsparameters eines Bremsfluids (BF), umfassend:
- Bereitstellen einer Bremssystemkomponente (26) nach einem der Ansprüche 1 bis 9 und einer Testvorrichtung (28) nach einem der Ansprüche 11 bis 13,
- vorübergehendes Öffnen des Rückschlagventils (38) durch Anlegen einer Antriebskraft an das Axialschubstück (40) über die Betätigungsfläche (64) der Testvorrichtung (58) und
- Aufnehmen einer Bremsfluidprobe im Inneren des Behälters (60) und
- Beobachten einer Veränderung einer Eigenschaft des Indikatorfluids (IF), die aus einer Wechselwirkung zwischen der Bremsfluidprobe und dem Indikatorfluid (IF) resultiert.

## Revendications

1. Composant de système de freinage (26) pour un véhicule (10), comprenant un canal (28) pour guider un liquide de frein (BF) et un module de sortie d'échantillon (32) pour retirer un échantillon de liquide de frein du canal (28), dans lequel le module de sortie d'échantillon (32) est relié fluidiquement au canal (28), dans lequel le module de sortie d'échantillon (32) comprend un clapet anti-retour (38) ayant une direction de blocage dirigée vers un environnement du module de sortie d'échantillon (32), et dans lequel le module de sortie d'échantillon (32) comprend une pièce de poussée (40) pour ouvrir sélectivement le clapet anti-retour (38).

2. Composant de système de freinage (26) selon la revendication 1, dans lequel la pièce de poussée (40) comprend un canal d'échantillonnage (52) pour guider l'échantillon de liquide de frein vers l'environnement.

3. Composant de système de freinage (26) selon l'une quelconque des revendications précédentes, dans lequel la pièce de poussée (40) comprend un réservoir (42) pour recevoir une quantité prédéfinie de liquide de frein (BF).

4. Composant de système de freinage (26) selon l'une quelconque des revendications précédentes, dans lequel la pièce de poussée (40) comprend une aiguille creuse (50) pour relier fluidiquement la pièce de poussée (40) à un dispositif de test (58).

5. Composant de système de freinage (26) selon la revendication 4, dans lequel le module de sortie d'échantillon (32) comprend un collier de protection (54) s'étendant autour de l'aiguille creuse (50) et faisant saillie sur l'aiguille creuse (50) le long d'une direction longitudinale de l'aiguille creuse (50).

6. Composant de système de freinage (26) selon l'une quelconque des revendications précédentes, dans lequel la pièce de poussée (40) comprend une surface de pression (48) pour appliquer une force motrice à la pièce de poussée (40) .

7. Composant de système de freinage (26) selon les revendications 4 ou 5 et la revendication 6, dans lequel l'aiguille creuse (50) s'étend à partir de la surface de pression (48).

8. Composant de système de freinage (26) selon l'une quelconque des revendications précédentes, dans lequel le canal (28) et le module de sortie d'échantillon (32) sont accouplés par l'intermédiaire d'une paire de filetages en prise mutuelle.

9. Composant de système de freinage (26) selon l'une quelconque des revendications précédentes, dans lequel le composant de système de freinage (26) est un étrier de frein (16a, 16b, 16c, 16d), un tuyau de système de freinage (22a, 22b, 22c, 22d) ou un raccord de tuyauterie.

10. Système de test (56) pour évaluer un paramètre de qualité d'un liquide de frein (BF), comprenant un composant de système de freinage (26) selon l'une quelconque des revendications précédentes et un dispositif de test (58), le dispositif de test (58) comprenant un récipient (60) et une surface opérationnelle (64) pour actionner sélectivement la pièce de poussée (40), dans lequel un fluide indicateur (IF) est prévu dans le récipient (60).

11. Dispositif de test (58) pour un système de test (56) selon la revendication 10, comprenant un récipient (60) et une surface opérationnelle (64) pour actionner sélectivement la pièce de poussée (40), dans lequel un fluide indicateur (IF) est prévu dans le récipient (60).

12. Dispositif de test (58) selon la revendication 11, dans lequel le récipient (60) est scellé avec un moyen d'étanchéité perçable (66).

13. Dispositif de test (58) selon la revendication 11 ou 12, dans lequel un gaz inerte (IG) est prévu dans le récipient (60) .

14. Véhicule (10) comprenant un système de freinage (24) ayant un composant de système de freinage (26) selon l'une quelconque des revendications 1 à 9.

15. Procédé permettant d'évaluer un paramètre de qualité d'un liquide de frein (BF), comprenant
- la fourniture d'un composant de système de freinage (26) selon l'une quelconque des revendications 1 à 9 et un dispositif de test (28) selon l'une quelconque des revendications 11 à 13,
- l'ouverture temporaire du clapet anti-retour (38) en appliquant une force motrice sur la pièce de poussée (40) par l'intermédiaire de la surface opérationnelle (64) du dispositif de test (58), et
- la réception d'un échantillon de liquide de frein à l'intérieur du récipient (60), et
- l'observation d'un changement d'une propriété du liquide indicateur (IF) résultant d'une interaction de l'échantillon de liquide de frein et du liquide indicateur (IF).
